# EUROPEAN PATENT APPLICATION

(11) **EP 4 815 465 A1**
(43) Date of publication of application: **30.09.2026**
(21) Application number: 26167151.5
(22) Date of filing: 24.03.2026
(51) Int. Cl.: H04N 21/2347, H04N 21/4405, H04N 21/6334, H04N 21/4367, G06F 3/01, H04N 21/835

(54) **VIDEO FILE PROCESSING METHOD AND APPARATUS, ELECTRONIC DEVICE AND STORAGE MEDIUM**

(30) Priority: 24.03.2025 CN 202510353741
(71) Applicant: Beijing Zitiao Network Technology Co., Ltd., Beijing 100190 (CN)
(72) Inventor: ZHANG, Peng, Beijing, 100028 (CN); JIA, Zhenjie, 100028, Beijing (CN); HAN, Zefang, Beijing, 100028 (CN); WANG, Xin, Beijing, 100028 (CN)
(74) Representative: Isarpatent

(57) **Abstract**

The present disclosure discloses a video file processing method and apparatus, an electronic device and a storage medium. The method includes: acquiring (S201) a video identification of a target video to be played sent by a head-mounted display device; decrypting (S202) an encrypted key file corresponding to the video identification based on device information of the target device, and taking out the encrypted key file from a memory, to obtain the encrypted key file; acquiring (S203) corresponding encrypted video information based on the video identification; and sending (S204) the encrypted key file and the encrypted video information to the head-mounted display device, such that the head-mounted display device plays the target video based on the encrypted key file and the encrypted video information.

## Description

### TECHNICAL FIELD

The present disclosure belongs to the technical field of video file processing, and in particular, to a video file processing method and apparatus, an electronic device and a storage medium.

### BACKGROUND

Encryption technology is the most commonly used security and confidentiality means, and the key to data encryption lies in encryption algorithms and key management. In a VR video service scenario, a video file is generally encrypted and then stored in a server for a head-mounted display device to acquire and play. However, the related storage manner of the video file is easy to read, and the security of the video file is poor.

### SUMMARY

The embodiments of the present disclosure provide an implementation different from the related art to solve the technical problem in the related art that the related storage manner of the video file is easy to read and the security of the video file is poor.

In a first aspect, the present disclosure provides a video file processing method, including: acquiring a video identification of a target video (e.g., a first video) to be played sent by a head-mounted display device; decrypting an encrypted key file corresponding to the video identification from a memory based on device information of the target device, and taking out the encrypted key file, to obtain the encrypted key file; acquiring corresponding encrypted video information based on the video identification; and sending the encrypted key file and the encrypted video information to the head-mounted display device, such that the head-mounted display device plays the target video based on the encrypted key file and the encrypted video information.

In a second aspect, the present disclosure provides a video file processing method, which is applied to a head-mounted display device and includes: sending a video identification of a target video to be played to a target device (e.g. a first device), such that the target device decrypts an encrypted key file corresponding to the video identification based on device information of the target device, and takes out the encrypted key file from a memory, to obtain the encrypted key file; acquires corresponding encrypted video information based on the video identification; and feeds back the encrypted key file and the encrypted video information; and playing the target video based on the encrypted key file and the encrypted video information.

In a third aspect, the present disclosure provides a video file processing apparatus, including: an acquisition unit, configured to acquire a video identification of a target video to be played sent by a head-mounted display device; a decryption unit, configured to decrypt an encrypted key file corresponding to the video identification based on device information of the target device, and take out the encrypted key file from a memory, to obtain the encrypted key file; where the acquisition unit is further configured to acquire corresponding encrypted video information based on the video identification; and a first sending unit, configured to send the encrypted key file and the encrypted video information to the head-mounted display device, such that the head-mounted display device plays the target video based on the encrypted key file and the encrypted video information.

In a fourth aspect, the present disclosure provides an electronic device, including: a processor; and a memory, configured to store executable instructions of the processor; where the processor is configured to perform any one of the first aspect, the second aspect, various possible implementations of the first aspect, or various possible implementations of the second aspect by executing the executable instructions.

In a fifth aspect, at least one embodiment of the present disclosure provides a computer-readable storage medium storing a computer program. When the computer program is executed by a processor, the computer program is caused to implement any one of the first aspect, the second aspect, various possible implementations of the first aspect, or various possible implementations of the second aspect.

In a sixth aspect, at least one embodiment of the present disclosure provides a computer program product, including a computer program. When the computer program is executed by a processor, the computer program is caused to implement any one of the first aspect, the second aspect, various possible implementations of the first aspect, or various possible implementations of the second aspect.

The present disclosure provides a video file processing method, and the method comprises:
acquiring the video identification of the target video to be played sent by the head-mounted display device;
decrypting the encrypted key file corresponding to the video identification based on the device information of the target device, and taking out the encrypted key file from the memory, to obtain the encrypted key file;
acquiring the corresponding encrypted video information based on the video identification; and sending the encrypted key file and the encrypted video information to the head-mounted display device, such that the head-mounted display device plays the target video based on the encrypted key file and the encrypted video information. When taking out the encrypted key file of the target video, the encrypted key file needs to be taken out based on the device information of the target device itself. Once the target video is read by other devices, the encrypted key file cannot be decrypted, and the target video cannot be played, thereby improving the security of the target video.

### BRIEF DESCRIPTION OF DRAWINGS

In order to more clearly illustrate the technical solutions in the embodiments of the present disclosure or in the related art, the following briefly introduces the drawings required for describing the embodiments or the related art. Apparently, the drawings in the following description show some embodiments of the present disclosure, and other drawings may also be obtained by a person of ordinary skill in the art according to these drawings without creative efforts. In the drawings:
Fig. 1a is a schematic diagram of a structure of a video file processing system according to at least one embodiment of the present disclosure;
Fig. 1b is a schematic diagram of a procedure of establishing a secure channel according to at least one embodiment of the present disclosure;
Fig. 2a is a schematic flowchart of a video file processing method according to at least one embodiment of the present disclosure;
Fig. 2b is a schematic diagram of a scenario of a video file processing method according to at least one embodiment of the present disclosure;
Fig. 3 is a schematic diagram of a structure of a video file processing apparatus according to at least one embodiment of the present disclosure; and
Fig. 4 is a schematic diagram of a structure of an electronic device according to at least one embodiment of the present disclosure.

### DETAILED DESCRIPTION

Embodiments of the present disclosure are described in detail below. Examples of the embodiments are shown in the drawings. The embodiments described below with reference to the drawings are exemplary and are intended to be illustrative of the present disclosure, but should not be construed as limiting the present disclosure.

In the specification, claims, and drawings of the embodiments of the present disclosure, the terms "first" and "second" are used to distinguish between similar objects, but are not necessarily used to describe a specific order or sequence. It should be understood that the data termed in such a way are interchangeable in proper circumstances, so that the embodiments of the present disclosure described herein may be implemented in orders except those illustrated or described herein. Moreover, the terms "include", "have", or any other variant thereof are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

First, some terms in the embodiments of the present disclosure are explained below to facilitate understanding by those skilled in the art.

Initialization vector: in the field of cryptography, an initialization vector (abbreviated as IV), or an initial vector, also known as a starting variable (abbreviated as SV), is a fixed-length input value.

A key is a corresponding substitution relationship between a cipher code and a plain code, and is divided into a symmetric key and an asymmetric key. If 00, 01, 02, and 03 are used to replace letters A, B, C, and D, 00 is translated into A, 01 is translated into B, 02 is translated into C, and 03 is translated into D is the key.

PBKDF2 applies a pseudorandom function to derive a key. The length of the derived key is not limited in nature (however, the maximum effective search space of the derived key is limited by the structure of the basic pseudorandom function).

Sandbox refers to a technology in which software runs in a restricted environment of an operating system.

CRC: cyclic redundancy check.

Device SN number: also known as a device sequence number, is a unique identifier of a device, and is used to identify information such as a production batch, a model, and production time of the device. The device SN number plays an important role in the production, sales, after-sales service and other links of an enterprise.

Encryption machine master key (MK) is a pair of top-level keys synthesized by three components and stored in an HSM (hardware security module).

AES (Advanced Encryption Standard) is a symmetric encryption algorithm widely used in the field of data encryption and protection. AES-128 is an AES algorithm that uses a key length of 128 bits, also known as AES-128 encryption.

CBC is an abbreviation for cipher-block chaining.

Transport Layer Security (abbreviated as TLS), and its predecessor Secure Sockets Layer (abbreviated as SSL) are security protocols, and their purpose is to provide security and data integrity for Internet communications.

The certificate in the present disclosure is a form of SSL digital certificate, which means that the digital certificate is submitted to prove identity or indicate the right to access online services.

CRC (Cyclic Redundancy Check) is a fast algorithm that generates a short fixed-digit check code based on data such as network data packets or computer files. It is mainly used to detect or check errors that may occur after data transmission or storage.

ECDH (Elliptic Curve Diffie-Hellman) is a key exchange protocol based on elliptic curve cryptography. It can securely exchange keys on insecure communication channels for encrypted communication and data transmission.

UUID: is an abbreviation for Universally Unique Identifier, and is a standard for software construction.

BIOS: is an abbreviation for the English "Basic Input Output System", and its Chinese name after literal translation is "basic input output system".

In the related art, encryption technology is the most commonly used security and confidentiality means, and the key to data encryption lies in encryption algorithms and key management. In a VR video service scenario, a video file is generally encrypted and then stored in a server for a head-mounted display device to acquire and play. However, the related storage manner of the video file is easy to read, and the security of the video file is poor. The present disclosure provides a storage manner of a video file, which may effectively prevent the video file from being read maliciously, and even if the video file is read maliciously, the video cannot be played. Moreover, the scheme of the present disclosure may further support offline encryption, playing, and playing at a random progress of a video on a PC, and the encrypted video may only be played on one or more designated VR devices.

Encryption technology is the most commonly used security and confidentiality means, and the key to data encryption lies in encryption algorithms and key management. In VR video services, an enterprise user, as a content generator, is worried about the leakage of his video content and needs a VR video encryption technology. A general DRM (Digital Rights Management) technology requires authorization of device playing based on Internet online services, which cannot meet an offline scenario, and the target device in the present disclosure may be an offline device, that is, the head-mounted display device and the target device may be connected through a local area network.

The technical solutions of the present disclosure and how the technical solutions of the present disclosure solve the above technical problems are described in detail below with specific embodiments. The following specific embodiments may be combined with each other, and the same or similar concepts or processes may not be described in detail in some embodiments. The embodiments of the present disclosure are described below with reference to the drawings.

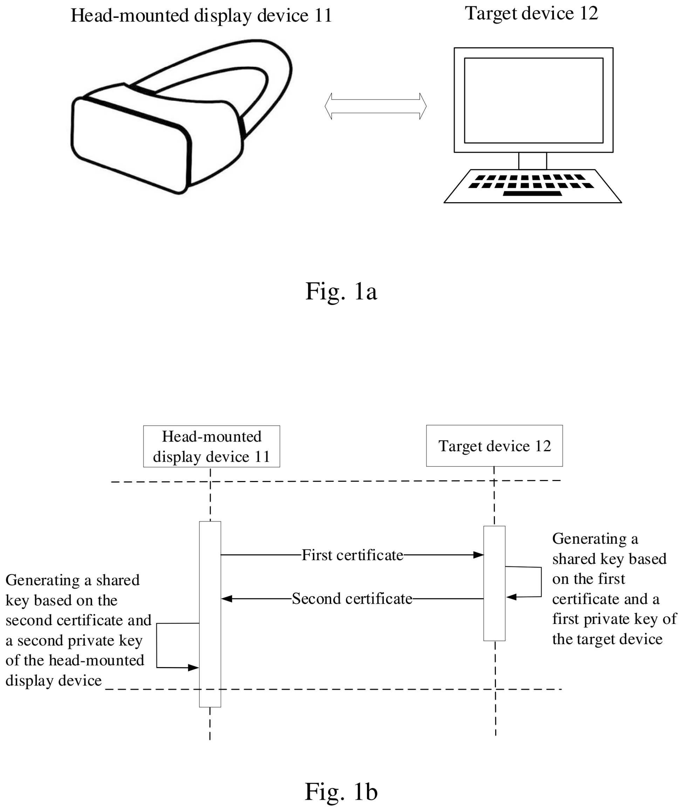

The scheme of the present disclosure may be applied to a VR scenario, and the target video in the present disclosure may be a video of the VR scenario. Fig. 1a is a schematic diagram of a structure of a video file processing system according to at least one exemplary embodiment of the present disclosure. The structure includes a head-mounted display device 11 and a target device 12. In the present disclosure, the head-mounted display device 11 and the target device 12 need to establish a secure channel before performing data interaction. Specifically, as shown in Fig. 1b, the head-mounted display device 11 sends a first certificate of the head-mounted display device 11 to the target device 12; after acquiring the first certificate, the target device 12 generates a shared key based on the first certificate and a first private key of the target device 12; and sends a second certificate of the target device 12 to the head-mounted display device 11, such that the head-mounted display device 11 generates the shared key based on the second certificate and a second private key of the head-mounted display device 11. The shared key is used in a subsequent data interaction process between the target device 12 and the head-mounted display device 11.

In some optional embodiments of the present disclosure, the target device 12 is further configured to perform the following steps through the secure channel: acquiring a video identification of a target video to be played sent by the head-mounted display device 11; decrypting an encrypted key file corresponding to the video identification based on device information of the target device 12, and taking out the encrypted key file from a memory, to obtain the encrypted key file; acquiring corresponding encrypted video information based on the video identification; and sending the encrypted key file and the encrypted video information to the head-mounted display device 11, such that the head-mounted display device 11 plays the target video based on the encrypted key file and the encrypted video information.

Optionally, the establishment of the secure channel depends on the implementation of ECDH.

For the execution principles and interaction processes of the component units in this system embodiment, such as the head-mounted display device and the target device, reference may be made to the descriptions of the following method embodiments.

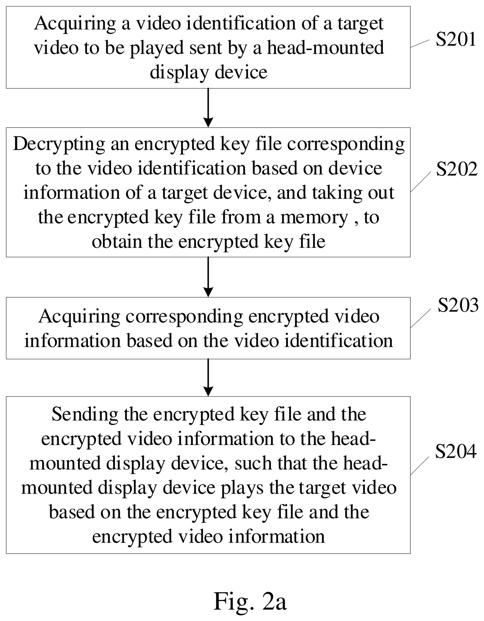

Fig. 2a is a schematic flowchart of a video file processing method according to at least one exemplary embodiment of the present disclosure. The method may be applied to a target device. Optionally, the target device may be connected to a head-mounted display device through a local area network. Specifically, the target device may be a PC. The method includes at least the following steps S201 to S204.

In S201, a video identification of a target video to be played sent by the head-mounted display device is acquired.

Optionally, the video identification is used to uniquely identify the target video.

In S202, an encrypted key file corresponding to the video identification is decrypted based on device information of the target device, and taken out from a memory, to obtain the encrypted key file.

In some optional embodiments of the present disclosure, the device information includes one or more of the following: a CPU ID, a UUID of a mainboard, a BIOS serial number, and a disk serial number. In S202, the step in which the encrypted key file corresponding to the video identification is decrypted based on the device information of the target device, and taken out from the memory, to obtain the encrypted key file includes the following steps S2021 and S2022.

In S2021, the device information is processed by using a hash algorithm, to obtain data information with a preset length.

In some optional embodiments of the present disclosure, the preset length (e.g., a first length) may be 256 bits.

In some optional embodiments of the present disclosure, the hash algorithm may be a PBKDF2 algorithm, and the data information may refer to a storage key and a third initialization vector.

Specifically, the step in S2021 in which the device information is processed by using the hash algorithm, to obtain the data information with the preset length may specifically include: deriving 256-bit data by using the PBKDF2 algorithm, and taking the first 128 bits as the storage key and the last 128 bits as the third initialization vector.

In S2022, the encrypted key file corresponding to the video identification is decrypted and taken out based on the data information from the memory, to obtain the encrypted key file.

Optionally, the step in S2022 in which the encrypted key file corresponding to the video identification is decrypted based on the data information and taken out from the memory, to obtain the encrypted key file may include: decrypting the encrypted key file corresponding to the video identification based on the storage key and taking out the encrypted key file from the memory and the third initialization vector by using an AES-128-CBC algorithm, to obtain the encrypted key file.

Optionally, the encrypted key file corresponding to the video identification may be determined based on the video identification. For example, an encrypted key file that includes the video identification in an included key file header may be used as the encrypted key file corresponding to the video identification.

It should be noted that when the encrypted key file is stored in the memory, it is also necessary to encrypt the encrypted key file by using the AES-128-CBC algorithm based on the storage key and the third initialization vector, and store the encrypted key file in the memory.

In S203, corresponding encrypted video information is acquired based on the video identification.

Optionally, the step in S203 of acquiring the corresponding encrypted video information based on the video identification includes: using encrypted video information that includes the video identification in an included plaintext file header as the encrypted video information corresponding to the video identification.

In S204, the encrypted key file and the encrypted video information are sent to the head-mounted display device, such that the head-mounted display device plays the target video based on the encrypted key file and the encrypted video information.

In some optional embodiments of the present disclosure, the method further includes the following steps S1 and S2.

In S1, a device identification of the head-mounted display device sent by the head-mounted display device is acquired.

Optionally, the device identification is used to uniquely identify the head-mounted display device, and the device identification may be an SN identification.

In S2, in response to the device identification indicating that the head-mounted display device is permitted to play the target video, the step in which the encrypted key file corresponding to the video identification is decrypted based on the device information of the target device, and taken out from the memory, to obtain the encrypted key file is triggered to be performed.

In some optional embodiments of the present disclosure, the method further includes: acquiring a device identification list of devices that are permitted to play the target video, and when the device identification is included in the device identification list, the device identification is considered to indicate that the head-mounted display device is permitted to play the target video.

Optionally, the device identification list may be stored in the target device in advance by a related person.

In some optional embodiments of the present disclosure, the method further includes the following steps S01 to S03.

In S01, first encryption and decryption information is acquired, where the first encryption and decryption information includes a video file encryption key and a first initialization vector.

Optionally, the video file encryption key and the first initialization vector may both be generated randomly.

In S02, the target video is encrypted by using the first encryption and decryption information, to obtain an encrypted video.

Optionally, the target video includes a video file header and video content.

When the target video is encrypted by using the first encryption and decryption information, a related encryption algorithm may be an AES-128-CTR method.

In S03, the encrypted video information is generated based on a plaintext file header and the encrypted video.

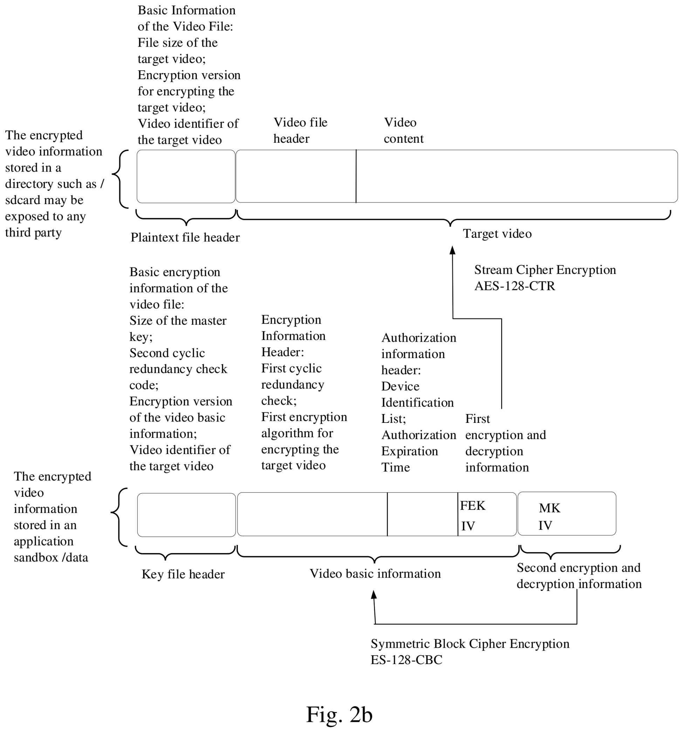

Optionally, as shown in Fig. 2b, the plaintext file header includes basic information of the video file, and the basic information of the video file includes: a file size of the target video, an encryption version of the encrypted target video, and a video identification of the target video.

Specifically, S03 may specifically include: concatenating the plaintext file header with the encrypted video to obtain the encrypted video information.

In some optional embodiments of the present disclosure, the method further includes the following steps S41 to S44.

In S41, video basic information of the target video is acquired, where the video basic information includes: an encryption information header, an authorization information header, and the first encryption and decryption information, the encryption information header includes: a first cyclic redundancy check and/or a first encryption algorithm for encrypting the target video, and the authorization information header includes a device identification list and/or an authorization expiration time of the target video.

The first cyclic redundancy check is used to check whether the encrypted video information is tampered with.

In S42, the video basic information is encrypted by using second encryption and decryption information, to obtain a video basic information encryption result, where the second encryption and decryption information includes a master key and a second initialization vector.

When the video basic information is encrypted by using the second encryption and decryption information, a related encryption algorithm may be an AES-128-CBC method.

In S43, a key file header is acquired, where the key file header includes basic encryption information of the video file, and the basic encryption information of the video file includes: a size of the master key and/or a second cyclic redundancy check, and the second cyclic redundancy check is used to check whether the encrypted key file is tampered with.

Optionally, the basic encryption information of the video file further includes an encryption version of the video basic information and a video identification of the target video.

In S44, the key file header, the video basic information encryption result, and the second encryption and decryption information are concatenated to obtain the encrypted key file.

In some optional embodiments of the present disclosure, the method further includes the following steps S51 to S53.

In S51, a first certificate sent by the head-mounted display device is received.

In S52, a shared key is generated based on the first certificate and a first private key of the target device.

In S53, a second certificate of the target device is sent to the head-mounted display device, such that the head-mounted display device generates the shared key based on the second certificate and a second private key of the head-mounted display device, where the shared key is used in a data interaction process with the head-mounted display device.

Optionally, the encrypted video information stored in a directory such as /sdcard may be exposed to any third party.

Optionally, the encrypted key file may be stored in an application sandbox /data.

The present disclosure provides the scheme of acquiring the video identification of the target video to be played sent by the head-mounted display device; decrypting the encrypted key file corresponding to the video identification based on the device information of the target device, and taking out the encrypted key file from the memory, to obtain the encrypted key file; acquiring the corresponding encrypted video information based on the video identification; and sending the encrypted key file and the encrypted video information to the head-mounted display device, such that the head-mounted display device plays the target video based on the encrypted key file and the encrypted video information. In the scheme, when taking out the encrypted key file of the target video, the encrypted key file needs to be taken out. Once the target video is read by other devices, the encrypted key file cannot be decrypted, and the target video cannot be played, thereby improving the security of the target video.

The present disclosure further provides a video file processing method, which is applied to a head-mounted display device and includes at least the following steps S301 and S302.

In S301, a video identification of a target video to be played is sent to a target device, such that the target device decrypts an encrypted key file corresponding to the video identification based on device information of the target device, and takes out the encrypted key file from a memory, to obtain the encrypted key file; acquires corresponding encrypted video information based on the video identification; and feeds back the encrypted key file and the encrypted video information.

In S302, the target video is played based on the encrypted key file and the encrypted video information.

In some optional embodiments of the present disclosure, the step in S302 of playing the target video based on the encrypted key file and the encrypted video information includes the following steps S3021 and S3022.

In S3021, second encryption and decryption information is acquired from the encrypted key file, where the second encryption and decryption information includes a master key and a second initialization vector.

The encrypted key file is obtained by concatenating the key file header, the video basic information encryption result, and the second encryption and decryption information.

The key file header includes basic encryption information of a video file, and the basic encryption information of the video file includes: a size of the master key and/or a second cyclic redundancy check, and the second cyclic redundancy check is used to check whether the encrypted key file is tampered with.

Optionally, before S3021, the method further includes: checking whether the encrypted key file is tampered with by using the second cyclic redundancy check; if yes, prompting an error; if no, triggering execution of S3021.

Optionally, before S3021, the method further includes: determining whether an encryption version of the video basic information is a preset version; if yes, triggering execution of S3021, or triggering execution of the step in which whether the encrypted key file is tampered with is checked by using the second cyclic redundancy check; if no, prompting an error.

In S3022, the video basic information encryption result in the encrypted key file is decrypted by using the second encryption and decryption information, to obtain the video basic information.

Optionally, the video basic information encryption result in the encrypted key file may be specifically decrypted by using the second encryption and decryption information based on the AES-128-CBC method, to obtain the video basic information.

In S3023, the first encryption and decryption information and the first encryption algorithm for encrypting the target video are acquired from the video basic information.

Optionally, the method further includes: determining whether the encrypted video information is tampered with by using the first cyclic redundancy check; if yes, prompting an error; if no, triggering execution of S3023.

In S3024, the encrypted video in the encrypted video information is decrypted by using the first encryption algorithm based on the first encryption and decryption information, to obtain the target video.

The encrypted video information is obtained by concatenating the plaintext file header with the encrypted video.

Optionally, the method further includes: comparing whether the video identification of the target video in the basic encryption information of the video file is consistent with the video identification of the target video in the plaintext file header; if yes, triggering execution of S3024.

Optionally, the method further includes: determining whether a device identification of the head-mounted display device is included in the device identification list; if yes, triggering execution of S3023 and S3024, or triggering execution of the step in which whether the encrypted video information is tampered with is determined by using the first cyclic redundancy check.

Optionally, the method further includes: determining whether current time reaches the authorization expiration time; if yes, prompting an error; if no, triggering execution of S3023 and S3024, the step in which whether the encrypted video information is tampered with is determined by using the first cyclic redundancy check, or the step in which whether the device identification of the head-mounted display device is included in the device identification list is determined.

In some optional embodiments of the present disclosure, the first encryption algorithm is AES-128-CTR.

Optionally, the first cyclic redundancy check is determined based on information other than the first cyclic redundancy check in the encrypted video information.

Optionally, the second cyclic redundancy check is determined based on information other than the second cyclic redundancy check in the encrypted key file.

In S3025, the target video is played.

For the specific implementation in this embodiment, reference may be made to the foregoing content, and details are not described herein again.

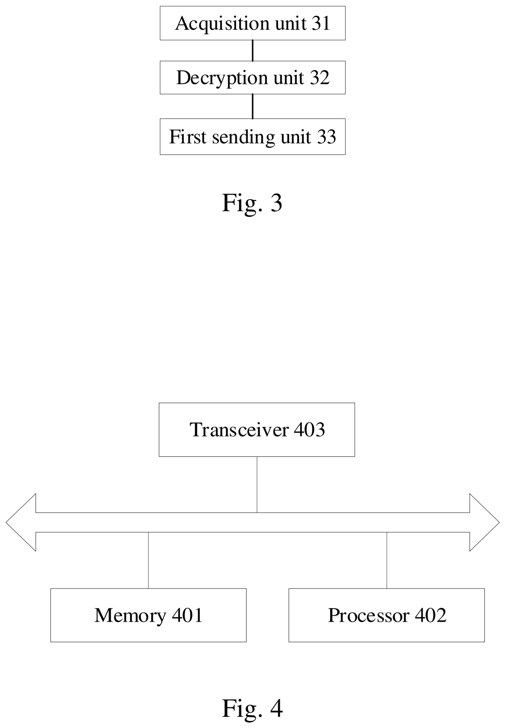

Fig. 3 is a schematic diagram of a structure of a video file processing apparatus according to at least one exemplary embodiment of the present disclosure. The apparatus includes: an acquisition unit 31, configured to acquire a video identification of a target video to be played sent by a head-mounted display device; a decryption unit 32, configured to decrypt an encrypted key file corresponding to the video identification based on device information of the target device, and take out the encrypted key file from a memory, to obtain the encrypted key file; where the acquisition unit 31 is further configured to acquire corresponding encrypted video information based on the video identification; and a first sending unit 33, configured to send the encrypted key file and the encrypted video information to the head-mounted display device, such that the head-mounted display device plays the target video based on the encrypted key file and the encrypted video information.

In some optional embodiments of the present disclosure, the apparatus is further configured to:
acquire a device identification of the head-mounted display device sent by the head-mounted display device;
and in response to the device identification indicating that the head-mounted display device is permitted to play the target video, trigger execution of the step in which the encrypted key file corresponding to the video identification is decrypted based on the device information of the target device, and taken out from the memory, to obtain the encrypted key file.

In some optional embodiments of the present disclosure, the device information includes one or more of the following: a CPU ID, a UUID of a mainboard, a BIOS serial number, and a disk serial number. When the apparatus is configured to decrypt the encrypted key file corresponding to the video identification based on the device information of the target device, and take out the encrypted key file from the memory, to obtain the encrypted key file, the apparatus is further configured to: process the device information by using a hash algorithm, to obtain data information with a preset length; and decrypt the encrypted key file corresponding to the video identification based on the data information and take out the encrypted key file from the memory, to obtain the encrypted key file.

In some optional embodiments of the present disclosure, the apparatus is configured to: acquire a device identification list of devices that are permitted to play the target video, and when the device identification is included in the device identification list, the device identification is considered to indicate that the head-mounted display device is permitted to play the target video.

In some optional embodiments of the present disclosure, the apparatus is configured to: acquire first encryption and decryption information, where the first encryption and decryption information includes a video file encryption key and a first initialization vector; encrypt the target video by using the first encryption and decryption information, to obtain an encrypted video; and generate the encrypted video information based on a plaintext file header and the encrypted video.

In some optional embodiments of the present disclosure, the apparatus is configured to: acquire video basic information of the target video, where the video basic information includes: an encryption information header, an authorization information header, and the first encryption and decryption information, the encryption information header includes: a first cyclic redundancy check and/or a first encryption algorithm for encrypting the target video, and the authorization information header includes a device identification list and/or an authorization expiration time of the target video; encrypt the video basic information by using second encryption and decryption information, to obtain a video basic information encryption result, where the second encryption and decryption information includes a master key and a second initialization vector; acquire a key file header, where the key file header includes: a size of the master key and/or a second cyclic redundancy check; and concatenate the key file header, the video basic information encryption result, and the second encryption and decryption information to obtain the encrypted key file.

In some optional embodiments of the present disclosure, the apparatus is configured to: receive a first certificate sent by the head-mounted display device; generate a shared key based on the first certificate and a first private key of the apparatus; and send a second certificate of the apparatus to the head-mounted display device, such that the head-mounted display device generates the shared key based on the second certificate and a second private key of the head-mounted display device, where the shared key is used in a data interaction process with the head-mounted display device.

In some optional embodiments of the present disclosure, the present disclosure further provides a video file processing apparatus, which is applied to a head-mounted display device and includes: a second sending unit, configured to send a video identification of a target video to be played to a target device, such that the target device decrypts an encrypted key file corresponding to the video identification based on device information of the target device, and takes out the encrypted key file from a memory, to obtain the encrypted key file; acquires corresponding encrypted video information based on the video identification; and feeds back the encrypted key file and the encrypted video information; and a playing unit, configured to play the target video based on the encrypted key file and the encrypted video information.

It should be understood that the apparatus embodiment may correspond to the method embodiment. For similar descriptions, reference may be made to the method embodiment. To avoid repetitions, details are not described herein again. Specifically, the apparatus may perform the above method embodiment, and the foregoing and other operations and/or functions of the modules in the apparatus are respectively intended to implement corresponding procedures of the methods in the above method embodiment, which are not described herein again for the sake of brevity.

The apparatus of the embodiment of the present disclosure is described above with reference to the drawings from the perspective of a functional module. It should be understood that the functional module may be implemented in the form of hardware, or may be implemented by instructions in the form of software, or may be implemented by a combination of hardware and a software module. Specifically, the steps in the method embodiments of the present disclosure may be completed by a hardware integrated logic circuit in a processor and/or the instructions in the form of the software. The steps of the method disclosed with reference to the embodiments of the present disclosure may be directly embodied to be completed by a hardware decoding processor or by a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the above method embodiments in combination with the hardware of the processor.

Fig. 4 is a schematic block diagram of an electronic device according to at least one embodiment of the present disclosure. The electronic device may include: a memory 401 and a processor 402, where the memory 401 is configured to store a computer program and transmit the program code to the processor 402. In other words, the processor 402 may invoke, from the memory 401, and run the computer program to implement the method in the embodiments of the present disclosure.

For example, the processor 402 may be configured to perform the above method embodiments according to the instructions in the computer program.

In some embodiments of the present disclosure, the processor 402 may include but be not limited to: a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or transistor logic device, a discrete hardware component, etc.

In some embodiments of the present disclosure, the memory 401 includes but is not limited to: a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAMs may be used, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (synch link DRAM, SLDRAM), and a direct rambus random access memory (Direct Rambus RAM, DR RAM).

In some embodiments of the present disclosure, the computer program may be divided into one or more modules, and the one or more modules are stored in the memory 401 and executed by the processor 402 to implement the method provided in the present disclosure. The one or more modules may be a series of computer program instruction segments capable of implementing specific functions, and the instruction segments are used to describe an execution process of the computer program in the electronic device.

As shown in Fig. 4, the electronic device may further include: a transceiver 403, which may be connected to the processor 402 or the memory 401.

The processor 402 may control the transceiver 403 to communicate with other devices, specifically to send information or data to other devices or to receive information or data sent by other devices. The transceiver 403 may include a transmitter and a receiver. The transceiver 403 may further include an antenna, and there may be one or more antennas.

It should be understood that the components of the electronic device are connected to each other through a bus system. In addition to a data bus, the bus system further includes a power bus, a control bus, and a status signal bus.

The present disclosure further provides a computer storage medium on which a computer program is stored. When the computer program is executed by a computer, the computer is enabled to perform the method in the above method embodiments. Alternatively, at least one embodiment of the present disclosure further provides a computer program product including instructions. When the instructions are executed by a computer, the computer is enabled to perform the method in the above method embodiments.

When software is used to implement the method, the method may be entirely or partially implemented in the form of the computer program product. The computer program product includes one or more computer instructions. When the computer program instructions are loaded and executed on a computer, the procedure or functions according to the embodiments of the present disclosure are entirely or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), etc.

A person of ordinary skill in the art may be aware that the modules and algorithm steps of various examples described in conjunction with the embodiments disclosed herein may be implemented in electronic hardware or a combination of computer software and electronic hardware. Whether these functions are performed in hardware or software depends on the specific application and design constraints of the technical solution. A person skilled in the art may implement the described functions by using different methods for each particular application, but such implementation should not be considered as going beyond the scope of the present disclosure.

In the several embodiments provided in the present disclosure, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings, direct couplings, or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, and may be located at one position, or may be distributed on a plurality of network units. Some or all of the modules may be selected according to actual needs to achieve the objectives of the solutions of the embodiments. For example, functional modules in the embodiments of the present disclosure may be integrated into one processing module, each of the modules may exist alone physically, or two or more modules may be integrated into one module.

The foregoing descriptions are merely specific implementations of the present disclosure, but are not intended to limit the scope of protection of the present disclosure. Any variation or replacement readily figured out by a person skilled in the art within the technical scope disclosed in the present disclosure shall fall within the scope of protection of the present disclosure. Therefore, the scope of protection of the present disclosure shall be subject to the scope of protection of the claims.

## Claims

1. A video file processing method, performed by a first device and comprising:
acquiring (S201) a video identification of a first video sent by a head-mounted display device;
decrypting (S202) an encrypted key file corresponding to the video identification based on device information of the first device, and taking out the encrypted key file from a memory, to obtain the encrypted key file;
acquiring (S203) corresponding encrypted video information based on the video identification; and
sending (S204) the encrypted key file and the encrypted video information to the head-mounted display device, such that the head-mounted display device plays the first video based on the encrypted key file and the encrypted video information.

2. The method of claim 1, further comprising:
acquiring a device identification of the head-mounted display device sent by the head-mounted display device; and
triggering, in response to the device identification indicating that the head-mounted display device is permitted to play the first video, execution of the decrypting the encrypted key file corresponding to the video identification based on the device information of the first device, and taking out the encrypted key file from the memory, to obtain the encrypted key file.

3. The method of claim 2, further comprising:
acquiring a device identification list of devices that are permitted to play the first video, and considering, in response to the device identification being comprised in the device identification list, that the device identification indicates that the head-mounted display device is permitted to play the first video.

4. The method of any of claims 1 to 3, wherein the device information comprises at least one of a group consisting of: a CPU ID, a UUID of a mainboard, a BIOS serial number, and a disk serial number, and the decrypting the encrypted key file corresponding to the video identification based on the device information of the first device, and taking out the encrypted key file from the memory, to obtain the encrypted key file comprises:
processing the device information by using a hash algorithm, to obtain data information with a first length; and
decrypting the encrypted key file corresponding to the video identification based on the data information and taking out the encrypted key file from the memory, to obtain the encrypted key file.

5. The method of any of claims 1 to 4, further comprising:
acquiring first encryption and decryption information, wherein the first encryption and decryption information comprises a video file encryption key and a first initialization vector;
encrypting the first video by using the first encryption and decryption information, to obtain an encrypted video; and
generating the encrypted video information based on a plaintext file header and the encrypted video.

6. The method of claim 5, further comprising:
acquiring video basic information of the first video, wherein the video basic information comprises an encryption information header, an authorization information header, and the first encryption and decryption information, the encryption information header comprises at least one of a first cyclic redundancy check or a first encryption algorithm for encrypting the first video, and the authorization information header comprises at least one of a device identification list or an authorization expiration time of the first video;
encrypting the video basic information by using second encryption and decryption information, to obtain a video basic information encryption result, wherein the second encryption and decryption information comprises a master key and a second initialization vector;
acquiring a key file header, wherein the key file header comprises at least one of a size of the master key or a second cyclic redundancy check; and
concatenating the key file header, the video basic information encryption result, and the second encryption and decryption information to obtain the encrypted key file.

7. The method of any of claims 1 to 6, further comprising:
receiving a first certificate sent by the head-mounted display device;
generating a shared key based on the first certificate and a first private key of the first device; and
sending a second certificate of the first device to the head-mounted display device, such that the head-mounted display device generates the shared key based on the second certificate and a second private key of the head-mounted display device,
wherein the shared key is used in a data interaction process with the head-mounted display device.

8. A video file processing method, performed by a head-mounted display device and comprising:
sending a video identification of a first video to a first device, such that the first device:
decrypts an encrypted key file corresponding to the video identification based on device information of the first device, and takes out the encrypted key file from a memory, to obtain the encrypted key file;
acquires corresponding encrypted video information based on the video identification; and
feeds back the encrypted key file and the encrypted video information; and
playing the first video based on the encrypted key file and the encrypted video information.

9. A video file processing apparatus, comprising:
an acquisition unit (31), configured to acquire a video identification of a first video sent by a head-mounted display device;
a decryption unit (32), configured to decrypt an encrypted key file corresponding to the video identification based on device information of the first device, and take out the encrypted key file from a memory, to obtain the encrypted key file;
wherein the acquisition unit (31) is further configured to acquire corresponding encrypted video information based on the video identification; and
a first sending unit (33), configured to send the encrypted key file and the encrypted video information to the head-mounted display device, such that the head-mounted display device plays the first video based on the encrypted key file and the encrypted video information.

10. An electronic device, comprising:
a processor (402); and
a memory (401), configured to store executable instructions of the processor (402);
wherein the processor (402), when executing the executable instructions, performs the method of any of claims 1 to 8.

11. A non-transitory computer-readable storage medium storing a computer program, wherein the computer program, when executed by a processor (402), is caused to implement the method of any of claims 1 to 8.
